(19) Europäisches Patentamt
European Patent Office
Office européen des brevets

(11) Veröffentlichungsnummer: **0 397 220 A1**

(12) # EUROPÄISCHE PATENTANMELDUNG

(21) Anmeldenummer: **90112221.8**

(22) Anmeldetag: **21.10.87**

(51) Int. Cl.⁵: **C11D 3/48, A01N 25/30, A01N 31/02, //(A01N25/30, 31:02)**

Diese Anmeldung is am 27 - 06 - 1990 als Teilanmeldung zu der unter INID-Kode 60 erwähnten Anmeldung eingereicht worden.

(30) Priorität: **27.10.86 DE 3636541**

(43) Veröffentlichungstag der Anmeldung: **14.11.90 Patentblatt 90/46**

(60) Veröffentlichungsnummer der früheren Anmeldung nach Art. 76 EPÜ: **0 265 825**

(84) Benannte Vertragsstaaten: **AT BE CH DE ES FR GB GR IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Guhl, Walter, Dr.**
**Wiedenhofer Strasse 27**
**D-5657 Haan(DE)**
Erfinder: **Scholz, Siegfried, Dr.**
**Benrodestrasse 23**
**D-4000 Düsseldorf 13(DE)**
Erfinder: **Schenker, Gilbert, Dr.**
**Hermann-Hesse-Strasse 5**
**D-4006 Erkrath 2(DE)**

(54) **Desinfektionsmittel mit parasitenabtötender Wirkung.**

(57) Die Erfindung betrifft Desinfektionsmittel zur Bekämpfung und Abtötung von parasitären, invasionsfähigen Dauerformen auf der Basis von Gemischen aus desinfizierenden Wirkstoffen und oberflächenaktiven Wirkstoffen, die dadurch gekennzeichnet sind, daß sie einen oder mehrere Desinfektionswirkstoffe aus der Gruppe aliphatische Alkohole mit 1 bis 4 C-Atomen, einen oder mehrere oberflächenaktive Wirkstoffe und Wasser enthalten, sowie die Verwendung derartiger Desinfektionsmittel zur Bekämpfung und Abtötung parasitärer, invasionsfähiger Dauerformen.

EP 0 397 220 A1

## Desinfektionsmittel mit parasitenabtötender Wirkung

Die Erfindung betrifft Desinfektionsmittel zur Bekämpfung und Abtötung von parasitären Dauerformen auf der Basis von Gemischen aus desinfizierenden Wirkstoffen und oberflächenaktiven Wirkstoffen.

Die landwirtschaftliche Haltung und Zucht verschiedener Tierarten, beispielsweise Geflügel, Schweine oder Rinder, wird dadurch beeinträchtigt bzw. die Zuchterfolge werden dadurch gemindert, daß die genannten Tierarten mit Coccidien und Spulwürmern befallen werden. Diese Parasitenarten schmarotzen im Darmtrakt und schädigen die Tiere durch Nährstoffentzug, Saug- und Einwanderungswunden und führen bei Massenbefall einzelner Tiere zu Leistungsdepression, Kümmern oder Tod, weil u.a. die von den Parasiten ausgeschiedenen Toxine auf das organische Gleichgewicht der Nutztiere einwirken.

Eine gezielte Wurm- bzw. Coccidienbekämpfung kann jedoch nicht darauf beschränkt werden, den von den Parasiten befallenen Nutztieren Wurm- bzw. Coccidienmittel zu verfüttern, um die Parasiten im Darmkanal abzutöten. Vielmehr muß bei der Parasitenbekämpfung berücksichtigt werden, daß die Schmarotzer sehr wiederstandsfähige parasitäre Dauerformen (Spulwurmeier, Coccidienoozysten) ausscheiden, die mit dem Kot der befallenen Nutztiere an die Außenwelt gelangen und den Stall verseuchen. Diese Dauerformen sind erneut invasionsfähig, d.h. sie können wieder in den Nährstoffkreislauf der Nutztiere Eingang finden und dadurch von neuem in den Organismus der Nutztiere gelangen. Die Folge ist ein erneuter Befall mit Coccidien bzw. Spulwürmern.

Üblicherweise wird daher - in Ergänzung zu einer Verfütterung von Anti-Parasitenmitteln - gegen die ausgeschiedenen, wiederstandsfähigen Dauerformen der Parasiten eine Spezialdesinfektion der Stallungen durchgeführt, wodurch die Dauerformen abgetötet werden und der Kreislauf (Ausscheidung der Parasitendauerformen und Wiederaufnahme über den Kot) durch Desinfektion wirksam unterbrochen wird.

Für derartige Stalldesinfektionsmaßnahmen sind bereits Spezialdesinfektionsmittel auf der Basis von phenolischen Wirkstoffen und Schwefelkohlenstoff erfolgreich in Gebrauch. Dem Schwefelkohlenstoff fällt dabei die Aufgabe zu, die sehr festen Membranen der Parasiteneier oder -oozysten zu durchdringen und den phenolischen Wirkstoff zur Abtötung des Ei- bzw. Oozysteninhaltes in das Innere der Parasitendauerformen einzuschleusen. Der Einsatz von Schwefelkohlenstoff für derartige Zwecke ist jedoch wegen der hohen Explosionsgefahr von $CS_2$ und seiner starken Toxizität nicht unbedenklich.

In der DE-OS 23 17 225 wird zur Überwindung dieser Nachteile ein Mittel zur Stalldesinfektion auf der Basis von desinfizierend wirkenden Phenolen oder Phenolderivaten und einem die Membranen der parasitären Dauerformen durchdringenden Lösungsmittel vorgeschlagen, das als Lösungsmittel eine Kombination aus Perchlorethylen und einem niederen Alkohol enthält. Nachteil dieser Zusammensetzung zur Desinfektion gegen parasitäre, invasionsfähige Dauerformen ist jedoch der Anteil an Perchlorethylen, der mit 10 bis 50 Gew-% ausgesprochen hoch liegt. Chlorierte Kohlenwasserstoffe sind, wie inzwischen allgemein bekannt, als ausgesprochen langlebige Umweltgifte erkannt worden, die sich insbesondere im Fettgewebe höherer Organismen anreichern und in der Nahrungskette zu Dauerschäden in höheren Organismen führen können. Zudem erwiesen sich Mittel mit einem Gehalt an chlorierten Kohlenwasserstoffen in der Praxis als nicht so wirksam, daß sich diese hätten durchsetzen können. Aus ökologischen und ökonomischen Gründen sollte deswegen auf die Verwendung chlorierter Kohlenwasserstoffe in Desinfektionsmitteln zur Bekämpfung parasitärer Dauerformen weitgehend, besser vollständig, verzichtet werden.

Die Erfindung stellte sich die Aufgabe, Desinfektionsmittel für die Verwendung in der Bekämpfung und Abtötung parasitärer Dauerformen, wie Spulwurmeier oder Coccidienoozysten zur Verfügung zu stellen, die die genannten Nachteile des Standes der Technik nicht aufweisen. So sollte eine gezielte Wirksamkeit der Desinfektionsmittel gegen die genannten parasitären invasionsfähigen Dauerformen mit einer guten Handhabbarkeit kombiniert, d.h. insbesondere die aus der Verwendung von Schwefelkohlenstoff bekannte Explosionsgefahr bzw. Toxizität völlig vermieden werden. Zudem sollten ausschließlich Bestandteile in den Desinfektionsmitteln Verwendung finden, die keine Umweltgefährdung mit sich bringen, wie sie von chlorierten Kohlenwasserstoffen bekannt ist. Erwünscht war außerdem eine desinfizierende Wirkung auch gegenüber sonstigen, in Tierstallungen auftretenden Schädlingen, wie Pilzen, Bakterien oder Viren, deren Bekämpfung auf diese Weise gleichzeitg mit der Bekämpfung schwierig abzutötender parasitärer Formen erfolgen könnte.

Die Erfindung betrifft Desinfektionsmittel zur Bekämpfung und Abtötung von parasitären, invasionsfähigen Dauerformen auf der Basis von Gemischen aus desinfizierenden Wirkstoffen und oberflächenaktiven Wirkstoffen, die dadurch gekennzeichnet sind, daß sie einen oder mehrere Desinfektionswirkstoffe aus der Gruppe aliphatische Alkohole mit 1 bis 4 C-Atomen, einen oder mehrere oberflächenaktive Wirkstoffe und Wasser enthalten.

Die Erfindung betrifft außerdem die Verwendung der genannten Desinfektionsmittel zur Bekämpfung

und Abtötung von parasitären, invasionsfähigen Dauerformen.

Die erfindungsgemäßen Desinfektionsmittel zur Bekämpfung und Abtötung parasitärer, invasionsfähiger Dauerformen, insbesondere von Spulwurmeiern und Coccidienoozysten, enthalten im wesentlichen zwei Gruppen von Wirkstoffen: desinfizierend wirkende Substanzen und oberflächenaktive Wirkstoffe. Gegebenenfalls können, wie weiter unten ausgeführt, auch noch weitere, in derartigen Desinfektionsmitteln übliche Duft-und/oder Hilfsstoffe in den erfindungsgemäßen Mitteln enthalten sein. Als Lösemittel, das nebenbei auch die Homogenität und Lagerbeständigkeit der Mittel wesentlich verbessert und ihre Auflösbarkeit in Wasser bei der Herstellung verdünnter Desinfektionslösungen erleichtert, ist in den erfindungsgemäßen Desinfektionsmitteln noch Wasser enthalten.

Erfindungsgemäß sind die desinfizierend wirkenden Komponenten aus der Gruppe der aliphatischen Alkohole mit 1 bis 4 C-Atomen ausgewählt. Als aliphatische Alkohole kommen Methanol, Ethanol, n-Propanol, i-Pro panol, n-Butanol, i-Butanol oder t-Butanol in Frage. Bevorzugt werden Methanol, Ethanol, n-Propanol und i-Propanol verwendet, wobei i-Propanol aufgrund seiner guten desinfizierenden Wirksamkeit als besonders bevorzugt zu nennen ist.

Je nach der desinfizierenden Wirksamkeit des desinfektionsaktiven Wirkstoffs aus der Gruppe der oben genannten Verbindungen, von denen einer einzeln oder mehrere in Kombination miteinander eingesetzt werden können, sind in den erfindungsgemäßen Desinfektionsmitteln die Desinfektionswirkstoffe in Mengen von 0,1 bis 80 Gew.-%, bezogen auf das Gesamtgewicht des Desinfektionsmittel-Konzentrats, enthalten. Bevorzugte Mengenbereiche der Desinfektionswirkstoffe liegen bei 5 bis 60 Gew.-%, wobei die Mengen der einzelnen Wirkstoffe einerseits oder der Desinfektions-Wirkstoff-Kombinationen andererseits über den gesamten Bereich innerhalb der genannten Grenzen schwanken können.

Neben dem bzw. den desinfizierend wirkenden Stoffen aus der oben genannten Gruppe enthalten die Desinfektionsmittel zur Bekämpfung und Abtötung parasitärer, invasionsfähiger Dauerformen gemäß der Erfindung einen oder mehrere oberflächenaktive Wirkstoffe. Diese finden sich in den Desinfektionsmitteln in Mengen von 10 bis 50 Gew.-%, bezogen auf das Gesamtgewicht des Desinfektionsmittelkonzentrats. Bevorzugt sind die oberflächenaktiven Wirkstoffe in Mengen von 15 bis 40 Gew.-% vorhanden, wobei die jeweilige Anwendungskonzentration von der oberflächenaktiven Wirksamkeit bzw. der die natürliche Hülle der parasitären Dauerformen permeabel machenden Wirksamkeit der oberflächenaktiven Wirkstoffe abhängt. Es können, wie auch im Falle der desinfizierend wirkenden Substanzen, Einzelsubstanzen aus der genannten Gruppe eingesetzt werden; es ist jedoch auch möglich, zwei oder mehrere oberflächen aktive Wirkstoffe in Kombination miteinander in beliebigen Mengenverhältnissen einzusetzen.

Als oberflächenaktive Wirkstoffe kommen zahlreiche, an sich aus dem Stand der Technik bekannte anionaktive, nichtionische oder kationaktive Tenside in Frage, die die Benetzungswirkung des erfindungsgemäßen Desinfektionsmittels verbessern und in der Lage sind, die Eihülle der parasitären Dauerformen permeabel zu machen.

Anionaktive Tenside, die erfindungsgemäß in den Desinfektionsmitteln verwendet werden können, sind in erster Linie alpha-Sulfofettsäureester und ihre Salze der allgemeinen Formel (I)

$$R^1 - \underset{\substack{|\\ SO_3^{\ominus}M^{\oplus}}}{CH} - COOR^2 \qquad (I)$$

in der

$R^1$ für einen geradkettigen oder verzweigten Alkylrest mit 8 bis 22 C-Atomen,

$R_2$ für einen geradkettigen oder verzweigten Alkylrest mit 1 bis 4 C-Atomen und

$M^{\oplus}$ für das Wasserstoffion, ein Alkalimetallion, beispielsweise Natrium- oder Kaliumion, oder ein Ammoniumion

steht.

In der allgemeinen Formel (I) steht also $R^1$ für die Reste n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Uneicosyl und n-Docosyl und die verzweigten Isomeren der genannten geradkettigen Alkylreste. $R^2$ kann für Methyl, Ethyl, n-Propyl, i-Propyl, n-Butyl, i-Butyl und t-Butyl stehen. $M^{\oplus}$ kann neben der Bedeutung eines Alkalimetallions, beispielsweise eines Natrium- oder Kaliumions, auch die Bedeutung eines Ammoniumions haben, das sich beispielsweise von primären, sekundären oder tertiären Alkylaminen mit 1 bis 4 C-Atomen pro Alkylrest oder von primären, sekundären oder tertiären Alkanolaminen mit 1 bis 4 C-Atomen pro Alkylengruppe ableitet. Es kommen also beispielsweise Amine mit einem, zwei oder drei Resten aus der Gruppe Methyl, Ethyl, n-Propyl, i-Propyl, n-Butyl, i-Butyl und t-Butyl in Frage. Von den

Alkanolaminen kommen solche mit einem, zwei oder drei Hydroxymethylenresten, Hydroxyethylenresten, Hydroxypropylenresten oder Hydroxytetramethylenresten in Frage. Als Ammoniumionen werden bevorzugt die von Alkanolaminen abgeleiteten Ammoniumionen verwendet.

Als anionaktive Tenside der allgemeinen Formel (I) sind bevorzugt solche, bei denen $R^1$ für einen geradkettigen Alkylrest mit 12 bis 18 C-Atomen, $R^2$ für Methyl und $M^{\oplus}$ für $Na^{\oplus}$ oder das Diethanolammoniumion steht. Die bevorzugt verwendbaren Verbindungen der allgemeinen Formel (I) stammen also von Fettsäuren ab, die aus nativen Fetten und Ölen durch Spaltung und anschließende Veresterung oder durch Umesterung mit Methanol im großtechnischen Maßstab bequem zugänglich sind. Es sind in diesem Zusammenhang nicht nur Einzelverbindungen der allgemeinen Formel (I), sondern auch Substanzgemische geeignet, wie sie bei der industriellen Aufarbeitung natürlicher Fette und Öle in großen Mengen anfallen.

In den erfindungsgemäßen Desinfektionsmitteln können anstelle von oder zusammen mit Verbindungen der oben genannten allgemeinen Formel (I) auch Ethylenoxid-und/oder Propylenoxid-Anlagerungsprodukte an Fettalkohole der allgemeinen Formel (II) enthalten sein

$$R^3 - O - (CH_2 - \underset{\underset{R^4}{|}}{CH}O)_m - R^5 \qquad (II)$$

in der
$R^3$ für einen geradkettigen oder verzweigten Alkylrest mit 8 bis 18 C-Atomen,
$R^4$ für H oder $CH_3$,
$R^5$ für einen geradkettigen oder verzweigten Alkylrest mit 1 bis 18 C-Atomen und
m für eine ganze Zahl im Bereich von 1 bis 50
steht.

Derartige Anlagerungsprodukte von Ethylenoxid und/oder Propylenoxid an Fettalkohole entstehen auf an sich bekannten Wegen aus den Produkten der industriellen Hydrierung nativer Fette bzw. Öle oder den aus ihnen hergestellten Säuren. Aus der Gruppe der Verbindungen mit der allgemeinen Formel (II) werden insbesondere diejenigen bevorzugt, in denen in der allgemeinen Formel (II) $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht. Derartige sogenannte Mischether, beispielsweise in besonders bevorzugter Weise die Verbindung der allgemeinen Formel (II), in der $R^3$ für ein Alkylrestgemisch mit 12 bis 18 C-Atomen, $R^4$ für H und $R^5$ für einen n-Butylrest steht und m im Bereich von 8 bis 10 liegt, wirken als oberflächenaktiver Wirkstoff allein besonders gut gegen Dauerformen von Ascariden (Spulwürmern) und zeigen bei der Bekämpfung der Dauerformen dieser Parasiten in Kombination mit entsprechendem desinfizierenden Wirkstoff eine ausgezeichnete Wirksamkeit. Sie können jedoch auch mit anderen oberflächenaktiven Wirkstoffen kombiniert werden, so daß dann eine ausgezeichnete Wirksamkeit sowohl gegen Ascariden als auch gegen Dauerformen anderer Parasiten erreicht werden kann. Zur Bekämpfung von Ascariden-Eiern allein stellen diese Verbindungen, die auch kommerziell im Handel erhältlich sind, eine bevorzugte Ausführungsform der oberflächenaktiven Wirkstoffe dar.

Anstelle der bisher genannten oberflächenaktiven Wirkstoffe oder in Kombination mit diesen können auch Umesterungsprodukte verwendet werden, die aus alpha-Sulfofettsäureestern oder deren Salzen der allgemeinen Formel (I), in der $R^1$, $R^2$ und $M^{\oplus}$ die oben genannten Bedeutungen haben, mit Anlagerungsprodukten von Ethylenoxid und/oder Propylenoxid an Fettalkohole der allgemeinen Formel (III),

$$R^6\text{-}O\text{-}(CH_2\text{-}CH_2\text{-}O)_m\ (CH_2\text{-}\underset{\underset{R^4}{|}}{CH}\text{-}O)_n\ (CH_2\text{-}CH_2\text{-}O)_p\ H \qquad (III)$$

in der
$R^6$ für geradkettige oder verzweigte Alkylreste mit 1 bis 18 C-Atomen,
$R^4$ für Wasserstoff oder $CH_3$ steht und
m, n und p unabhängig voneinander ganze Zahlen im Bereich von 0 bis 10 bedeuten, die Summe (m + n + p) maximal 30 und die Summe (m + p) maximal 20 beträgt,
entstehen.

Die Polyetheralkohole der allgemeinen Formel (III) werden mit den alpha-Sulfofettsäureestern oder deren Salzen der allgemeinen Formel (I) in an sich bekannter Weise in einer Umesterungsreaktion

umgesetzt. Es entstehen neue alpha-Sulfofettsäure-Polyetherester mit guter Wirksamkeit als oberflächenaktive Wirkstoffe in den erfindungsgemäßen Desinfektionsmitteln. Von derartigen Estersulfonat-Folgeprodukten finden bevorzugt diejenigen Verwendung, die mit Anlagerungsprodukten von Ethylenoxid und/oder Propylenoxid an Fettalkohole der allgemeinen Formel (III) erhalten werden, in der $R^6$ für einen geradkettigen Alkylrest mit 1 bis 18 C-Atomen, $R^4$ für Wasserstoff oder $CH_3$ und m, n und p unabhängig voneinander für ganze Zahlen im Bereich von 3 bis 10 stehen. Die daraus erhaltenen Estersulfonat-Folgeprodukte zeigen als oberflächenaktive Wirkstoffe allein in Kombination mit den oben genannten Desinfektionswirkstoffen eine hervorragende Wirksamkeit gegen parasitäre Protozoen, wie beispielsweise Coccidienoozysten. Sie werden deshalb als solche in einer bevorzugten Ausführungsform der vorliegenden Erfindung als oberflächenaktive Wirkstoffe allein verwendet, können jedoch auch mit beliebigen anderen oberflächenaktiven Substanzen der vorgenannten oder nachfolgend aufgeführten Art kombiniert werden, um gute Wirksamkeit nicht nur gegen parasitäre Protozoen, sondern auch gegen Dauerformen von Ascariden und anderen Helminten zu zeigen.

Um beispielsweise - in einer bevorzugten Ausführungsform der vorliegenden Erfindung - ein Desinfektionsmittel herzustellen, das zur Bekämpfung und Abtötung sowohl von Ascarideneiern als auch von Dauerformen parasitärer Protozoen, wie beispielsweise Coccidienoozysten, geeignet ist, kombiniert man einen desinfizierenden Wirkstoff aus der oben näher beschriebenen Gruppe mit zwei oder mehreren oberflächenaktiven Wirkstoffen, von denen mindestens einer aus der Gruppe der Verbindungen der allgemeinen Formel (II) stammt, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht und mindestens ein weiterer aus der Gruppe der Umesterungsprodukte von alpha-Sulfofettsäureestern oder ihren Salzen der allgemeinen Formel (I), in der $R^1$ für einen geradkettigen Alkylrest mit 12 bis 18 C-Atomen, $R^2$ für H und $M^{\oplus}$ für das Diethanolammoniumkation steht, mit Anlagerungsprodukten von Fettalkoholen an Ethylenoxid und/oder Propylenoxid der allgemeinen Formel (III) stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 5 stehen.

Die erfindungsgemäßen Desinfektionsmittel enthalten aus den oben schon näher beschriebenen Gründen in der Regel Wasser. Dieses ist üblicherweise in einer Menge in den Desinfektionsmitteln enthalten, die die Summe der Mengen der desinfizierenden Wirkstoffe und der oberflächenaktiven Wirkstoffe zu 100 Gew.-% ergänzt. Bevorzugterweise liegt die Menge an Wasser im Bereich von 5 bis 35 Gew.-%; sie kann jedoch in Ausnahmefällen auch darunter oder darüber liegen.

In einer besonders bevorzugten Ausführungsform enthalten Desinfektionsmittel mit ausgezeichneter Wirkung sowohl gegen Spulwurmeier als auch gegen Coccidienoozysten i-Propanol, wobei die Menge des genannten desinfizierenden Wirkstoffs im Bereich von 5 bis 60 Gew.-%, bezogen auf das Gesamtgewicht des Desinfektionsmittelkonzentrats, liegen, und mehrere oberflächenaktive Wirkstoffe, von denen mindestens einer aus der Gruppe der Verbindungen der allgemeinen Formel (II) stammt, in der $R^3$ für einen geradkettigen Alkylrest mit 12 bis 18 C-Atomen, $R^4$ für H , $R^5$ für einen verzweigten Alkylrest mit 3 oder 4 C-Atomen und m für eine ganze Zahl im Bereich von 3 bis 10 steht, und mindestens ein weiterer aus der Gruppe der Umesterungsprodukte von alpha-Sulfofettsäureestern oder deren Salzen der allgemeinen Formel (I), in der $R^1$ für einen geradkettigen Alkylrest mit 12 bis 18 C-Atomen, $R_2$ für H und für $M^{\oplus}$ für $Na^{\oplus}$ oder das Diethanolammoniumion steht, mit Anlagerungsprodukten von Ethylenoxid und/oder Propylenoxid an Fettalkohole der allgemeinen Formel (III), stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen, wobei die Summe der Mengen der oberflächenaktiven Wirkstoffe einen Gewichtsprozent-Anteil von 15 bis 40 Gew.-% erreicht und Wasser in einer Menge, die die Summe der Mengen von desinfizierenden Wirkstoffen und oberflächenaktiven Wirkstoffen zu 100 Gew.-% ergänzt.

Neben den oben genannten oberflächenaktiven Wirkstoffen, die bevorzugt verwendet werden, kommen - je nach Anwendungsbereich - auch noch weitere, an sich aus dem Stand der Technik bekannte Tenside zur Verwendung in den erfindungsgemäßen Desinfektionsmitteln in Frage.

Als solche sind beispielsweise Anlagerungsprodukte von Ethylenoxid und/oder Propylenoxid an Alkylphenole, Anlagerungsprodukte von Ethylenoxid und/oder Propylenoxid an Nonylphenol, Fettamine mit 8 bis 18 C-Atomen im Alkylrest, quartäre Ammoniumverbindungen der allgemeinen Formel (IV)

$R^7R^8R^9R^{10}N^{\oplus}X^{\ominus}$ (IV)

in der

$R^7$ für einen geradkettigen Alkylrest mit 8 bis 18 C-Atomen, bevorzugt für geradkettige Alkylreste mit 12 bis 16 C-Atomen,

$R^8$ und $R^9$ unabhängig voneinander für geradkettige Alkylreste mit 1 bis 4 C-Atomen, bevorzugt gleichzeitig für Methyl,

$R^{10}$ für einen Benzylrest oder für einen geradkettigen Alkylrest mit 1 bis 4 C-Atomen, bevorzugt für Methyl,

und
X für Halogen, bevorzugt für Cl oder Br,
steht, 2-Pyridinthiol-N-oxid und seine wasserlöslichen Alkalimetall- oder Erdalkalimetallsalze, bevorzugt seine wasserlöslichen Natriumsalze und Alkylmono- oder Oligoglucoside mit 8 bis 18 C-Atomen in einem geradkettigen oder verzweigten Alkylrest und einer Zahl von 1 bis 8 Glucosidresten, bevorzugt Alkylmono- oder Oligoglucoside mit 12 bis 16 C-Atomen in einem geradkettigen Alkylrest und einer Zahl von 1 bis 3 Glucoseresten, zu nennen.

Die oben näher beschriebenen Desinfektionsmittel mit parasitenabtötender Wirkung kommen in der Regel als Konzentrate in den Handel, die Wasser in einer Menge von maximal 35 Gew.-% enthalten. Der Wasseranteil dient, wie schon näher ausgeführt, zur Verbesserung der Homogenität und Lagerbeständigkeit der Desinfektionsmittel-Konzentrate sowie zur Erleichterung der Auflösbarkeit der Konzentrate in Wasser bei der Herstellung verdünnter Anwendungslösungen. Vor der Anwendung zur Desinfektion gegen parasitäre Dauerformen, beispielsweise in Geflügel-, Schweine- oder Rinderställen, werden verdünnte Spüllösungen hergestellt, die einen Gehalt im Bereich von 0,5 bis 5 % der erfindungsgemäßen Desinfektionsmittel aufweisen und darüberhinaus aus Wasser bestehen. Derartige wässrige Lösungen werden in bekannter Weise in Stallungen, Tierboxen oder ähnlichem ausgesprüht oder in den von den Parasiten befallenen Räumen vernebelt und bewirken bei gleichmäßiger Verteilung eine sichere Abtötung von Spulwurmeiern bzw. Unschädlichmachung von Coccidienoozysten oder Dauerformen anderer, ansonsten durch Desinfektionsmittel nur schwer bekämpfbarer parasitärer Schädlinge. Ein besonderer Vorteil der erfindungsgemäßen Desinfektionsmittel bzw. der mit ihnen hergestellten verdünnten Anwendungslösungen besteht darin, daß weder bei der Herstellung noch beim Aussprühen giftige oder brennbare Dämpfe auftreten, wie sie aus früheren Desinfektionsmitteln, die $CS_2$ oder perhalogenierte Kohlenwasserstoffe enthielten, bekannt waren. Dadurch wird die Gefahr von Explosionen oder Bränden wie auch die Gefahr einer Vergiftung von Personal oder Nutztieren auf ein Minimum reduziert, wenn nicht ganz beseitigt. Zudem zeigen derartige Desinfektionsmittel eine hervorragende Wirksamkeit bei der Bekämpfung parasitärer, invasionsfähiger Dauerformen, wie beispielsweise Spulwurmeiern und/ oder Coccidienoozysten. Es ist mit den erfindungsgemäßen Desinfektionsmitteln möglich, Anwendungslösungen bereitzustellen, die entweder gezielt zur selektiven Bekämpfung einer der genannten parasitären Dauerformen eingesetzt werden können, oder auch solche Lösungen zuzubereiten, die gegen mehrere Dauerformen gleichzeitig wirksam sind. Dabei erreichen die erfindungsgemäßen Desinfektionsmittel in der beschriebenen Verwendung deutlich bessere Ergebnisse, als sie nach den Richtlinien für die Prüfung chemischer Desinfektionsmittel der DVG (Deutsche Veterniärmedizinische Gesellschaft) gefordert werden. Um nach diesen Richtlinien ein Präparat als wirksam zu deklarieren, müssen über 90 % der Eier abgetötet sein bzw. dürfen die Oozysten nicht mehr infektiös sein. Mit den erfindungsgemäßen Mitteln ist eine Abtötungsrate von über 98 % der Eier bzw. eine quantitative Vernichtungsrate der Oozysten schon bei Einwirkzeiten und Konzentrationen in der Anwendungslösung zu erreichen, die deutlich unter den Werten für aus dem Stand der Technik bekannte Desinfektionsmittel für den gleichen Zweck liegen.

Die Erfindung wird durch die nachfolgenden Beispiele näher erläutert.

Nach den Richtlinien für die Prüfung chemischer Desinfektionsmittel der DVG wurden zur Prüfung der Wirksamkeit der Desinfektionsmittel an parasitären Dauerformen sporulierte Oozysten (infektiöse Stadien) der Hühnercoccidiose und noch nicht entwickelte Eier des Schweinespulwurms als Modellorganismen verwendet. Nach Literaturmeinung sind diese Stadien der beiden Parasiten die am schwierigsten abzutötenden parasitären Formen.

Zur Prüfung der Wirksamkeit von Desinfektionsmitteln gemäß der Erfindung gegen parasitäre Dauerformen wurden die Eier des Schweinespulwurms nach der Exposition ca. 21 Tage bei +25 °C bebrütet. Danach wurden pro Versuchsansatz 3 x 100 Eier ausgezählt. Daraus errechnete sich der Prozentsatz der abgetöteten und der embryonisierten Spulwurmeier. Um ein Präparat als wirksam zu deklarieren, mußten über 90 % der Spulwurmeier abgetötet sein.

Zur Feststellung des Desinfektionserfolges auf sporulierte Oozysten war der Tierversuch erforderlich. Um diesen auf ein Minimum zu beschränken, wurden mikroskopische Voruntersuchungen durchgeführt. Hierbei wurden pro Versuchsansatz 200 000 Oozysten exponiert und anschließend ausgezählt. Die wiedergefundenen Oozysten wurden als der überlebende und dadurch infektionsfähige Prozentsatz bewertet. Nur bei einer hohen Abtötungsrate wurde im folgenden Tierversuch vom 5. bis 7. Tag nach der Infektion täglich der Kot von Hühnerküken mikroskopisch auf ausgeschiedene Oozysten untersucht. Am 7. bzw. 8. Tag wurde der Darm auf Läsionen bzw. der Blinddarmkot auf Oozysten überprüft. Bei wirksam deklarierten Desinfektionsmitteln durften sporulierte Oozysten nicht mehr zur Infektion der Küken führen.

Beispiel 1

Es wurde ein Desinfektionsmittelkonzentrat aus folgenden Komponenten zusammengestellt, die miteinander gerührt und in Lösung gebracht wurden (Teile sind Gewichtsteile und entsprechen Gewichtsprozenten, bezogen auf das Gesamtgewicht des Konzentrats):
30 Teile Isopropanol (80 %),
25 Teile eines Umesterungsproduktes des alpha-Sulfofettsäureesters der allgemeinen Formel (I), in der $R^1$ für ein Alkylrestgemisch mit 14 bis 16 C-Atomen, $R^2$ für einen Methylrest und $M^{\oplus}$ für das Diethanolammoniumkation steht, mit einem Anlagerungsprodukt von Ethylenoxid an einen Fettalkohol der allgemeinen Formel (III), in der $R^6$ für ein Gemisch von Alkylresten mit 12 bis 18 C-Atomen, m für die Zahl 3 und n und p für die Zahl 0 stehen,
15 Teile des Anlagerungsproduktes von Ethylenoxid an einen Fettalkohol der allgemeinen Formel (II), in der $R^3$ für ein Gemisch geradkettiger Alkylreste mit 12 bis 18 C- Atomen, $R^4$ für H, $R^5$ für n-Butyl und m für 9 steht (Maximum der Produktverteilung),
12 Teile p-Chlor-m-kresol,
6 Teile Pentadecylsulfonat-Natriumsalz (94 %),
0,525 Teile Phosphorsäure (75 %) und
11,475 Teile Kondenswasser.

Durch Verdünnen mit Wasser wurde eine Anwendungslösung mit einer Konzentration von 2 % des Konzentrates hergestellt. Diese wurde in die Stallungen bzw. Tierboxen gesprüht. Nach der erforderlichen Einwirkzeit wurden die oben beschriebenen Untersuchungen entsprechend den DVG-Vorschriften durchgeführt.

Ergebnis:

Es wurde gefunden, daß über 90 % der Spulwurmeier abgetötet waren; bei den Hühnerküken wurden keine infektiösen Oozysten mehr gefunden.

In analoger Weise wurde durch Verdünnen des oben beschriebenen Konzentrats mit Wasser eine 5 %ige Lösung hergestellt. Nach Versprühen dieser Lösung ergab sich eine Abtötungsrate der Spulwurmeier von über 98 %; infektiöse Oozysten wurden ebenfalls nicht mehr gefunden.

Beispiel 2

In analoger Weise wie in Beispiel 1 wurde ein Desinfektionsmittelkonzentrat aus folgenden Bestandteilen hergestellt:
40 Teile i-Propanol (80 %),
20 Teile des in Beispiel 1 beschriebenen Umesterungsproduktes der alpha-Sulfofettsäure der allgemeinen Formel (I) mit dem Fettalkohol-Ethylenoxid-Anlagerungsprodukt,
10 Teile p-Chlor-m-kresol,
8 Teile Pentadecylsulfonat-Natriumsalz (94 %ig),
0,7 Teile Phosphorsäure (75 %ig) und
15,3 Teile Kondenswasser.
Aus diesem Konzentrat wurde eine 5 %ige Lösung hergestellt und diese - wie in Beispiel 1 beschrieben - zur Anwendung gebracht.

Ergebnis:

Es wurden bei Hühnerküken keine infektiösen Oozysten mehr gefunden; diese Desinfektionsmittellösung erfüllte also in vollem Umfang die DVG-Vorschriften.

Beispiel 3

Es wurde eine fertige Anwendungslösung hergestellt, die
70 Teile i-Propanol (80 %),

0,5 Teile Chlorhexidindigluconat,
0,5 Teile $H_2O_2$,
1 Teil Anlagerungsprodukt von 10 Mol Ethylenoxid an Nonylphenol und
Duftstoffe und Wasser in einer Menge enthielt, die die Gesamtmenge aller Komponenten auf 100 Teile auffüllt. Die Anwendungslösung wurde in der oben beschriebenen Weise eingesetzt.

Ergebnis:

Es wurde eine Abtötungsrate für Spulwurmeier oberhalb von 94 % gefunden; auch diese Anwendungslösung erfüllte also die Bestimmungen der DVG in vollem Umfang.

**Ansprüche**

1. Desinfektionsmittel zur Bekämpfung und Abtötung von parasitären, invasionsfähigen Dauerformen auf der Basis von Gemischen aus desinfizierenden Wirkstoffen und oberflächenaktiven Wirkstoffen, dadurch gekennzeichnet, daß sie
(a) einen oder mehrere Desinfektionswirkstoffe aus der Gruppe aliphatische Alkohole mit 1 bis 4 C-Atomen,
b) einen oder mehrere oberflächenaktive Wirkstoffe, und
(c) Wasser
enthalten.

2. Desinfektionsmittel nach Anspruch 1, dadurch gekennzeichnet, daß sie
(a) einen oder mehrere Desinfektionswirkstoffe aus der Gruppe aliphatische Alkohole mit 1 bis 4 C-Atomen, in Mengen von 0,1 bis 80 Gew.-%, bezogen auf das Gesamtgewicht des Desinfektionsmittelkonzentrats,
(b) einen oder mehrere oberflächenaktive Wirkstoffe in Mengen von 10 bis 50 Gew.-%, bezogen auf das Gesamtgewicht des Desinfektionsmittelkonzentrats und
(c) Wasser in einer Menge, die die Summe der desinfizierend wirkenden und oberflächenaktiven Komponenten zu 100 Gew.-% ergänzt,
enthalten.

3. Desinfektionsmittel nach Ansprüchen 1 und 2, dadurch gekennzeichnet, daß sie einen oder mehrere Desinfektionswirkstoffe aus der Gruppe Methanol, Ethanol, n-Propanol und i-Propanol enthalten.

4. Desinfektionsmittel nach Anspruch 3, dadurch gekennzeichnet, daß sie i-Propanol enthalten.

5. Desinfektionsmittel nach Ansprüchen 1 und 2, dadurch gekennzeichnet, daß sie einen oder mehrere oberflächenaktive Wirkstoffe aus der Gruppe
(a) alpha-Sulfofettsäureester und ihre Salze der allgemeinen Formel (I)

$$R^1 - \underset{\substack{|\\ SO_3^{\ominus}M^{\oplus}}}{CH} - COOR^2 \qquad (I)$$

in der
$R^1$ für einen geradkettigen oder verzweigten Alkylrest mit 8 bis 22 C-Atomen,
$R^2$ für einen geradkettigen oder verzweigten Alkylrest mit 1 bis 4 C-Atomen und
$M^{\oplus}$ für das Wasserstoffion, ein Alkalimetallion oder ein Ammoniumion
steht,
(b) Ethylenoxid- und/oder Propylenoxid-Anlagerungsprodukte an Fettalkohole der allgemeinen Formel (II)

$$R^3 - O - (CH_2 - \underset{\substack{|\\ R^4}}{CH}O)_m - R^5 \qquad (II)$$

in der
$R^3$ für einen geradkettigen oder verzweigten Alkylrest mit 8 bis 18 C-Atomen,
$R^4$ für H oder $CH_3$,
$R^5$ für einen geradkettigen oder verzweigten Alkylrest mit 1 bis 18 C-Atomen und
m für eine ganze Zahl im Bereich von 1 bis 50

steht,
(c) Umesterungsprodukte von alpha-Sulfofettsäureestern und ihren Salzen der allgemeinen Formel (I), in der $R^1$, $R^2$ und $M^{\oplus}$ die oben genannten Bedeutungen haben, mit Anlagerungsprodukten von Ethylenoxid und/oder Propylenoxid an Fettalkohole der allgemeinen Formel (III)

$$R^6\text{-O-}(CH_2\text{-}CH_2O)_m(CH_2\text{-}\underset{R^4}{CH}\text{-O})_n(CH_2\text{-}CH_2\text{-O})_pH \qquad (III)$$

in der
$R^6$ für einen geradkettigen oder verzweigten Alkylrest mit 1 bis 18 C-Atomen,
$R^4$ für H oder $CH_3$ steht und
m, n und p unabhängig voneinander ganze Zahlen im Bereich von 0 bis 10 bedeuten, die Summe (m+n+p) maximal 30 und die Summe (m+p) maximal 20 ist,
(d) Anlagerungsprodukte von Ethylenoxid und/oder Propylenoxid an Alkylphenole,
(e) Fettamine mit 8 bis 18 C-Atomen im Alkylrest,
(f) quartäre Ammoniumverbindungen der allgemeinen Formel (IV)
$R^7R^8R^9R^{10}N^{\oplus}X^{\ominus}$ (IV)
in der
$R^7$ für einen geradkettigen Alkylrest mit 8 bis 18 C-Atomen,
$R^8$ und $R^9$ unabhängig voneinander für einen geradkettigen Alkylrest mit 1 bis 4 C-Atomen,
$R^{10}$ für einen Benzylrest oder für einen geradkettigen Alkylrest mit 1 bis 4 C-Atomen, bevorzugt für Methyl, und
X für Halogen
steht,
(g) 2-Pyridinthiol-N-oxid und seine wasserlöslichen Alkalimetall- oder Erdalkalimetallsalze und
(h) Alkylmono- oder -oligoglucoside mit 8 bis 18 C-Atomen in einem geradkettigen oder verzweigten Alkylrest und einer Zahl von 1 bis 8 Glucosidresten
enthalten.

6. Desinfektionsmittel nach Anspruch 5, dadurch gekennzeichnet, daß sie einen oder mehrere oberflächenaktive Wirkstoffe aus der Gruppe der Verbindungen der allgemeinen Formel (I), in der $R^1$ für einen geradkettigen Alkylrest mit 12 bis 18 C-Atomen, $R^2$ für $CH_3$ und $M^{\oplus}$ für $Na^{\oplus}$ oder das Diethanolammoniumion steht, der Verbindung der allgemeinen Formel (II), in der $R^3$ für einen geradkettigen Alkylrest mit 8 bis 18 C-Atomen, $R^4$ für H, $R^5$ für einen geradkettigen oder verzweigten Alkylrest mit 1 bis 4 C-Atomen und m für eine Zahl im Bereich von 3 bis 10 steht, der Umesterungsprodukte von alpha-Sulfofettsäureestern und deren Salzen der allgemeinen Formel (I), in der $R^1$, $R^2$ und $M^+$ die oben angegebenen Bedeutungen haben, mit Anlagerungsprodukten von Ethylenoxid und/oder Propylenoxid an Fettalkohole der allgemeinen Formel (III), in der $R^6$ für geradkettige Alkylreste mit 1 bis 18 C-Atomen, $R^4$ für H oder $CH_3$ und m, n und p unabhängig voneinander für Zahlen im Bereich von 3 bis 10 stehen, der Verbindungen der allgemeinen Formel (IV), in der $R^7$ für einen geradkettigen Alkylrest mit 12 bis 16 C-Atomen, $R^8$, $R^9$ und $R^{10}$ für Methyl und X für Cl oder Br stehen, der Alkylmono- oder -oligoglucoside mit 12 bis 16 C-Atomen in einem geradkettigen Alkylrest und einer Zahl von 1 bis 3 Glucoseresten und der Anlagerungsprodukte von Ethylenoxid und/oder Propylenoxid an Nonylphenol enthalten.

7. Desinfektionsmittel nach Anspruch 6, dadurch gekennzeichnet, daß sie als oberflächenaktive Wirkstoffe eine oder mehrere Verbindungen aus der Gruppe der Verbindungen der allgemeinen Formel (II) enthalten, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht.

8. Desinfektionsmittel nach Anspruch 6, dadurch gekennzeichnet, daß sie als oberflächenaktive Wirkstoffe eine oder mehrere Verbindungen aus der Gruppe der Umesterungprodukte von alpha-Sulfofettsäureestern oder ihren Salzen der allgemeinen Formel (I), in der $R^1$ für einen geradkettigen Alkylrest mit 12 bis 18 C-Atomen, $R^2$ für H und $M^{\oplus}$ für $Na^{\oplus}$ oder das Diethanolammoniumion steht, mit Anlagerungsprodukten von Ethylenoxid und/oder Propylenoxid an Fettalkohole der allgemeinen Formel (III) enthalten, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen.

9. Desinfektionsmittel nach Anspruch 6, dadurch gekennzeichnet, daß sie als oberflächenaktive Wirkstoffe mehrere Verbindungen enthalten, von denen mindestens eine aus der Gruppe der Verbindungen der

allgemeinen Formel (II) stammt, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht, und zusätzlich mindestens ein weiterer aus der Gruppe der Umesterungsprodukte von alpha-Sulfofettsäureestern oder ihren Salzen der allgemeinen Formel (I), in der $R^1$ für einen geradkettigen Alkylrest mit 12 bis 18 C-Atomen, $R^2$ für H und $M^{\oplus}$ für $Na^+$ oder das Diethylammoniumion steht, mit Anlagerungsprodukten von Ethylenoxid an Fettalkohole der allgemeinen Forml(III) stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen.

10. Desinfektionsmittel nach Ansprüchen 1 bis 9, dadurch gekennzeichnet, daß sie
(a) i-Propanol in einer Menge im Bereich von 5 bis 60 Gew.-%, bezogen auf das Gesamtgewicht des Desinfektionsmittel-Konzentrats,
(b) mehrere Verbindungen aus der Gruppe der oberflächenaktiven Wirkstoffe, von denen mindestens eine aus der Gruppe der Verbindungen der allgemeinen Formel (II) stammt, in der $R^3$ für einen geradkettigen Alkylrest mit 12 bis 18 C-Atomen, $R^4$ für H, $R^5$ für einen geradkettigen oder verzweigten Alkylrest mit 3 oder 4 C-Atomen und m für eine ganze Zahl im Bereich von 3 bis 10 steht, und mindestens eine weitere aus der Gruppe der Umesterungsprodukte von alpha-Sulfofettsäureestern oder ihren Salzen der allgemeinen Formel (I), in der $R^1$ für einen geradkettigen Alkrest mit 12 bis 18 C-Atomen, $R^2$ für H und $M^{\oplus}$ für $Na^{\oplus}$ oder das Diethylammoniumion steht, mit Anlagerungsprodukten von Ethylenoxid und/oder Propylenoxid an Fettalkohole der allgemeinen Formel (III) stammt, in der $R^6$ für einen geradkettigen Alkylrest mit 12 bis 18 C-Atomen, $R^4$ für H oder $CH_3$ und m, n und p unabhängig voneinander für ganze Zahlen im Bereich von 3 bis 10 stehen, wobei die Summe der Menge der oberflächenaktiven Wirkstoffe im Bereich von 15 bis 40 Gew.-% liegt,
(c) Wasser in einer Menge, die die Summe der Mengen der desinfizierenden und der oberflächenaktiven Wirkstoffe zu 100 Gew.-% ergänzt,
enthalten.

11. Verwendung der Desinfektionsmittel nach Ansprüchen 1 bis 10 zur Bekämpfung und Abtötung von parasitären, invasionsfähigen Dauerformen.

12. Verwendung der Desinfektionsmittel nach Ansprüchen 1 bis 10 zur Bekämpfung von Spulwurmeiern und Coccidienoozysten.

13. Verwendung der Desinfektionsmittel nach Ansprüchen 1 bis 10 zur Bekämpfung und Abtötung von parasitären, invasionsfähigen Dauerformen in verdünnten wässrigen Lösungen mit einem Desinfektionsmittel-Gehalt von 0,5 bis 5 Gew.-%, bezogen auf die verdünnte Anwendungslösung.

Europäisches Patentamt

# EUROPÄISCHER RECHERCHENBERICHT

Nummer der Anmeldung

EP 90 11 2221

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 604 859 (STAFFORD-MILLER LTD) * Seite 2, Zeilen 36-53; Seite 3, Zeile 42 - Seite 5, Zeile 13; Seite 12, Zeile 10 - Seite 13, Zeile 11; Ansprüche * --- | 1-13 | C 11 D 3/48<br>A 01 N 25/30<br>A 01 N 31/02 //<br>(A 01 N 25/30<br>A 01 N 31:02 ) |
| X | GB-A-2 024 626 (STAFFORD-MILLER LTD) * Seite 6, Zeile 11 - Seite 7, Zeile 11; Ansprüche * --- | 1-13 | |
| D,X | DE-A-2 317 225 (HENKEL & CIE) * Insgesamt * --- | 1-13 | |
| X | DE-A-3 117 792 (SCHÜLKE & MAYR) * Ansprüche; Seite 4, Zeilen 7-14; Seite 8, Zeilen 2-23 * ----- | 1-13 | |
| | | | **RECHERCHIERTE SACHGEBIETE (Int. Cl.5)** |
| | | | A 01 N<br>C 11 D |

Der vorliegende Recherchenbericht wurde für alle Patentansprüche erstellt

| Recherchenort | Abschlußdatum der Recherche | Prüfer |
|---|---|---|
| DEN HAAG | 21-08-1990 | FLETCHER A.S. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)